(19) Europäisches Patentamt
European Patent Office
Office européen des brevets

(11) Veröffentlichungsnummer: **0 214 579 B1**

(12) **EUROPÄISCHE PATENTSCHRIFT**

(45) Veröffentlichungstag der Patentschrift: **06.05.92**

(51) Int. Cl.5: **C09B 67/22**, C09B 48/00, C09B 57/00, C09D 17/00

(21) Anmeldenummer: **86112029.3**

(22) Anmeldetag: **30.08.86**

(54) **Pigmente der Chinacridonchinon-Reihe, Verfahren zu ihrer Herstellung und ihre Verwendung.**

(30) Priorität: **11.09.85 DE 3532343**

(43) Veröffentlichungstag der Anmeldung:
**18.03.87 Patentblatt 87/12**

(45) Bekanntmachung des Hinweises auf die Patenterteilung:
**06.05.92 Patentblatt 92/19**

(84) Benannte Vertragsstaaten:
**CH DE FR GB IT LI**

(56) Entgegenhaltungen:
**DE-A- 2 016 078**
**DE-A- 2 711 272**
**US-A- 3 748 162**
**US-A- 4 286 998**

(73) Patentinhaber: **HOECHST AKTIENGESELL-SCHAFT**
**Postfach 80 03 20**
**W-6230 Frankfurt am Main 80(DE)**

(72) Erfinder: **Spietschka, Ernst, Dr.**
**Am Rödchen 8**
**W-6270 Idstein/Taunus(DE)**
Erfinder: **Prokschy, Frank, Dr.**
**Grimoldweg 15**
**W-6230 Frankfurt am Main 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 214 579 B1

## Beschreibung

Gegenstand der Erfindung sind neue Pigmente der Chinacridonchinon-Reihe, die sehr gute Licht- und Wetterechtheitseigenschaften besitzen, Verfahren zu ihrer Herstellung und ihre Verwendung zum Anfärben plastischer Massen und insbesondere zur Herstellung von Automobillacken.

Chinacridonchinone der nachstehend genannten allgemeinen Formel CC sind schon relativ lange bekannt (Sharvin, J. Russ. Phys. Chem. Ges. 47, 1260 (1915); Lesnianski, Ber. 51, 695 (1918)), doch fanden sie wegen ihrer äußerst schlechten Licht- und Wetterechtheit keine Verwendung als Pigmente.

In neuerer Zeit wurden jedoch Pigmente auf der Basis Chinacridonchinon entwickelt, die hinsichtlich ihrer Licht- und Wetterechtheit und Coloristik von großer Bedeutung sind. Das Prinzip dieser verbesserten Pigmente beruht auf einer Mischkristallbildung der Chinacridonchinone der allgemeinen Formel CC mit Chinacridonen der allgemeinen Formel C und Dihydrochinacridonen der allgemeinen Formel DC (US-PS 3 686 009, US-PS 3 748 162).

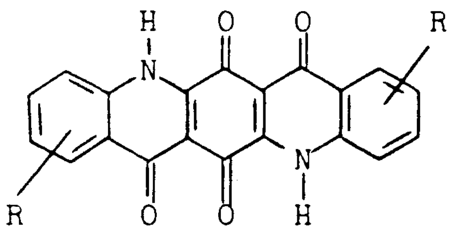

CC

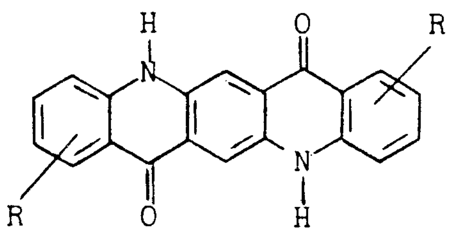

C

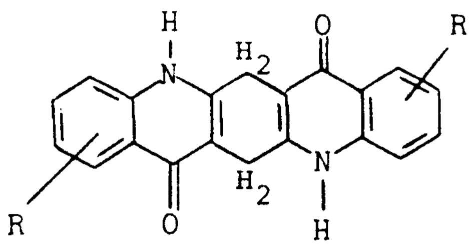

DC

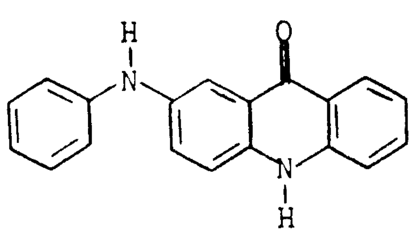

A

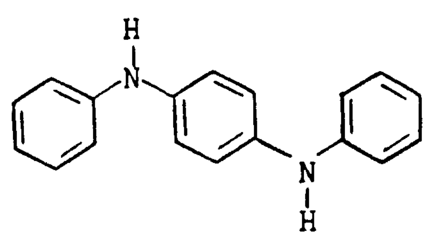

P

Darüber hinaus läßt sich durch Zusatz (ca. 10 Gew.-%) von 2-Anilinoacridon der vorstehend genannten Formel A und N,N'-Diphenyl-p-phenylendiamin der vorstehend genannten Formel P (US-PS 4 286 998, US-PS 3 341 345) eine deutliche Verbesserung der Licht- und Wetterechtheiten von Chinacridonchinon-Pigmenten erzielen.

Unter einem Mischkristall versteht man dabei, daß eine oder mehrere zugesetzte Komponenten im Kristallgitter einer "Wirtverbindung" vorliegen. Das Röntgenbeugungsdiagramm eines Mischkristalls zeigt dann nur das (in vielen Fällen aufgeweitete) Kristallgitter der Wirtverbindung, während im Diagramm der entsprechenden mechanischen Mischung alle Komponenten nachweisbar sind.

Es wurde nun gefunden, daß ein Einbau von 7,15-Dihydropyrido (2,1-b)-(1',2'; 1,2)-pyrimido (4, 5-g)-chinazolin-7,15-dionen der allgemeinen Formel (B)

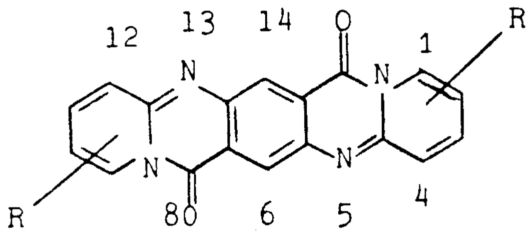

(B)

in welcher R ein Wasserstoff- oder Chloratom oder eine Methylgruppe bedeutet (Altiparmakian, Helv. Chim. Acta 61, 1146 (1978); Yokoyama, Bull. Chem. Soc. Jpn. 51, 1901 (1978)), in das Gitter von Chinacridonchinonen der genannten allgemeinen Formel CC bzw. in Mischkristalle aus Chinacridonchinonen und Chinacridonen der genannten allgemeinen Formel C schon bei Mengen von 2 - 5 % bei den entstehenden Pigmenten zu einer deutlichen Verbesserung der Licht- und Wetterechtheit führt.

Die vorliegende Erfindung betrifft somit neue Pigmente der Chinacridonchinon-Reihe, bestehend aus 99 - 30 Molprozent eines Chinacridonchinons der allgemeinen Formel (1)

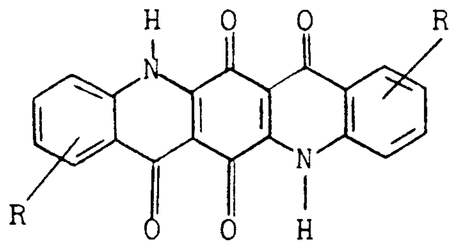

(1)

in welcher R ein Wasserstoff- oder Chloratom oder eine Methylgruppe bedeutet, 0 - 60 Molprozent eines Chinacridons der allgemeinen Formel (2)

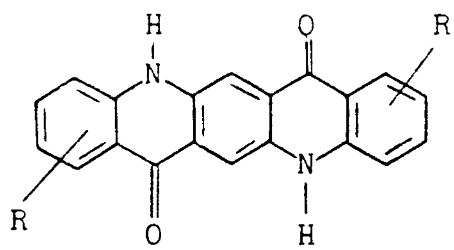

(2)

in welcher R die vorstehend genannte Bedeutung hat, und 1 - 10 Molprozent eines 7,15-Dihydro-pyrido-(2,1-b)-(1',2'; 1,2)-pyrimido-(4,5-g)-chinazolin-7,15-dions der allgemeinen Formel (3)

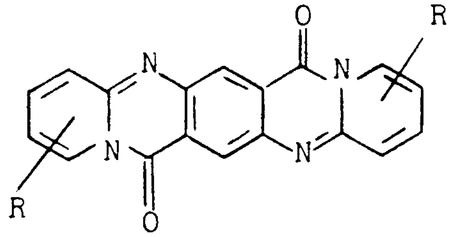

(3)

in welcher R die vorstehend genannte Bedeutung hat, wobei die zugesetzten Verbindungen der Formeln (2) und (3) im Kristallgitter des Chinacridonchinons der Formel (1) vorliegen, und ein Verfahren zu deren Herstellung, indem man die Komponenten der vorstehend genannten allgemeinen Formeln (1), (3) und ggfs. (2) in der 5- bis 20-fachen Gewichtsmenge 96 - 100 %iger Schwefelsäure bei Temperaturen von 0 bis 40 ° C löst und die Lösung anschließend auf die 5- bis 15-fache Gewichtsmenge Wasser von 0 bis 30 ° C, bezogen auf das Gewicht der angewandten Schwefelsäure, gibt, sowie deren Verwendung zum Anfärben von plastischen Massen und insbesondere zur Herstellung von Automobillacken für Metallic-Lackierungen.

Besonders wertvolle neue Pigmente der Chinacridonchinonreihe sind solche, die aus 99 - 75 Molprozent eines Chinacridonchinons der Formel

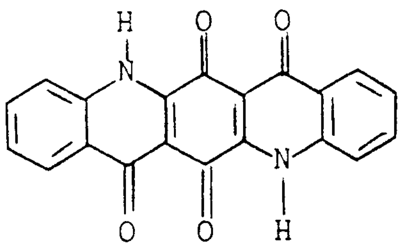

,

0 bis 15 Molprozent eines Chinacridons der Formel

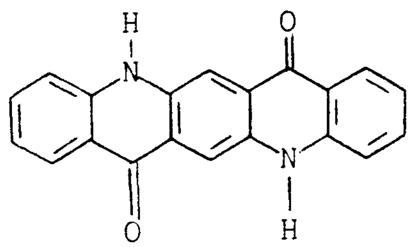

und 1 - 10 Molprozent eines 7,15-Dihydro-pyrido-(2,1-b)-(1',2'; 1,2)-pyrimido-(4,5-g)-chinazolin-7,15-dions der Formel

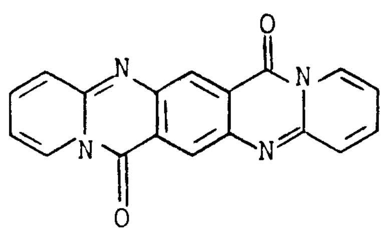

bestehen, wobei die beiden letztgenannten Verbindungen im Kristallgitter des Chinacridonchinons vorliegen (diese neuen Pigmente ergeben in Metallic-Automobillackierungen goldene Farbtöne), und solche, die aus 54 - 25 Molprozent eines Chinacridonchinons der Formel

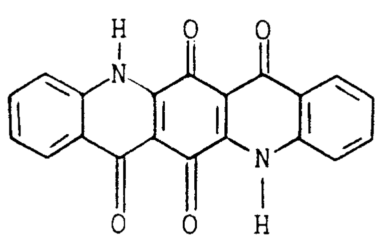

,

45 - 65 Molprozent eines Chinacridons der Formel

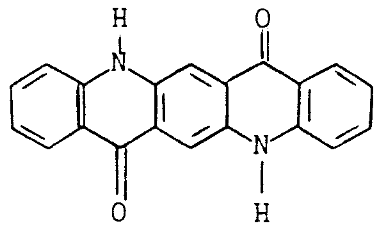

und 1 - 10 Molprozent eines 7,15-Dihydro-pyrido-(2,1-b)-(1',2'; 1,2)-pyrimido-(4,5-g)-chinazolin-7,15-dions der Formel

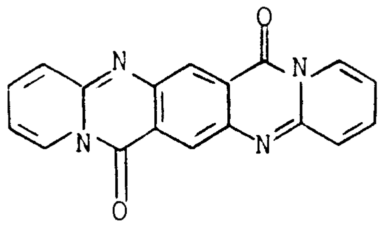

bestehen, wobei die beiden letztgenannten Verbindungen im Kristallgitter des Chinacridonchinons vorliegen (diese neuen Pigmente ergeben in Metallic-Automobillackierungen Maroonfarbtöne).

Bei Verwendung größerer Mengen an Verbindungen der genannten allgemeinen Formeln (2) oder (3) können diese zum Teil auch außerhalb des Kristallgitters der Verbindungen der genannten allgemeinen Formel (1) vorliegen.

Die Verwendung von Verbindungen der Formel (3) zur Verbesserung der Licht- und Wetterechtheiten von Chinacridonchinon-Pigmenten ist neu und besitzt gegenüber den zuvor erwähnten Verbindungen (6,13-Dihydrochinacridon (DC), 2-Anilinoacridon (A) und N,N'-Diphenyl-p-phenylendiamin (P)) die weiter unten beschriebenen Vorteile.

Die in neuerer Zeit, wie weiter oben erwähnt, bevorzugt zur Verbesserung der Licht- und Wetterechtheiten von Chinacridonchinonpigmenten eingesetzten Verbindungen 6,13-Dihydro-chinacridon der Formel DC, 2-Anilinoacridon der Formel A und N,N'-Diphenyl-p-phenylendiamin der Formel P, sowie deren Derivate, sind im Prinzip dem Chinacridon C strukturell nahe verwandt. So lassen sich die beiden letztgenannen Verbindungen vom Chinacridon der Formel C formal durch den Verlust einer bzw. beider Carbonylfunktionen ableiten. Sie besitzen weiterhin alle 2 N-H-Funktionen, die zweifellos eine Mischkristallbildung mit den Chinacridonchinonen der Formel CC begünstigen.
Es war daher umso überraschender, daß Verbindungen der Formel B, die keine N-H-Funktionen und auch ein vom Chinacridon unterschiedliches Molekülgerüst besitzen, gleichfalls wie die Verbindungen der Formel DC, D, A und P die Licht- und Wetterechtheit von Chinacridonchinonen verbessern. Da es sich bei 6,13-Dihydrochinacridonen der Formel DC, 2-Anilinoacridon der Formel A und anderen p-Phenylendiaminderivaten um farblose bis schwach gefärbte Verbindungen handelt, bewirkt deren Zusatz (in der Praxis bis zu 10 Gew.-%) verständlicherweise eine Verringerung der Farbstärke im Vergleich zu den unbehandelten Pigmenten. Bei der Synthese von Mischkristallen auf Basis Chinacridonchinon unter Verwendung von Verbindungen der Formel B, bei denen es sich selbst schon um farbige Pigmente handelt, erhält man Pigmentzusammensetzungen, die den bekannten hinsichtlich Coloristik und Farbstärke überlegen sind. Weiterhin genügen wesentlich geringere Mengen von Verbindungen der Formel B als beispielsweise von 6,13-Dihydrochinacridon, um die in der Praxis erforderlichen Licht- und Wetterechtheiten zu erreichen.

Erwähnt sei noch, daß zur Synthese von Verbindungen wie 2-Anilinoacridon ein relativ großer Aufwand erforderlich ist, während zur Synthese von Verbindungen der Formel B aus 3,6-Dihydro-2,5-dihydroxyterephthalsäureestern und 2-Aminopyridinen Anlagen verwendet werden können, wie sie auch bei der Synthese von Chinacridonen eingesetzt werden.

Die Synthese der Mischkristalle erfolgt in bekannter Weise (US-PS 3 298 847, US-PS 3 607 336), bevorzugt durch Lösen der Komponenten in der 6- bis 10-fachen Gewichtsmenge 96 bis 100%iger Schwefelsaure bei 0 bis 40 ° C und anschliessende Hydrolyse,in dem man die schwefelsaure Lösung auf

die 5 bis 10-fache Gewichtsmenge (bezogen auf die eingesetzte Schwefelsäure) Wasser von 0 bis 10 °C, bevorzugt Eiswasser, gibt. Weiterhin kann die Verbindung der Formel B oder die als Vorstufe dienende 2,5-Di-(2-aminopyridyl)-terephthalsäure während der Synthese der Chinacridonchinone der Formel CC und der Chinacridone der Formel C zugesetzt werden.

Die so erhaltenen Pigmente lassen sich nach bekannten Methoden des Finishs und der Präparierung in die für die Praxis erforderliche Form bringen (vgl. beispielsweise US-PS 4 286 998; DE-AS 2 016 078).

Beispiele

1a) 16,5 g (48,3 mmol) der Verbindung der weiter oben genannten Formel (1) (R = H) und 0,8 g (2,55 mmol) der weiter oben genannten Formel (3) (R = H) werden in 150 g 96%iger Schwefelsäure bei maximal 20 °C gelöst. Die erhaltene Lösung läßt man auf 750 g Eiswasser fließen. Die ausgefallene Suspension wird 2 Stunden auf 90 bis 95 °C erhitzt. Nach Absaugen, Waschen und Trocknen erhält man 17,1 g eines goldgelben Pigments.

2a) 16,8 g (49,1 mmol) der Verbindung der weiter oben genannten Formel (1) (R = H), 1,8 g (5,77 mmol) der Verbindung der weiter oben genannten Formel (2) (R = H) und 0,9 g (2,87 mmol) der Verbindung der weiter oben genannten Formel (3) (R = H) werden in 160 g 96 %iger Schwefelsäure gelöst und durch Zufließenlassen auf 800 g Eiswasser hydrolisiert. Nach Aufarbeitung wie in Beispiel 1a) beschrieben, erhält man 19,1 g eines rotgoldenen Pigments mit sehr guter Licht- und Wetterechtheit in Automobillacken.

3a) 7,5 g (21,9 mmol) der Verbindung der weiter oben genannten Formel (1) (R = H), 10,3 g (33,1 mmol) der Verbindung der weiter oben genannten Formel (2) (R = H) und 0,45 g (1,43 mmol) der Verbindung der genannten Formel (3) (R = H) werden in 180 g 96%iger Schwefelsäure gelöst, durch Zulaufenlassen auf 900 g Eiswasser hydrolisiert und wie in Beispiel 1a) beschrieben, weiterverarbeitet. Man erhält 18,0 g eines maroonfarbenen Pigmentes mit ausgezeichneter Licht- und Wetterechtheit in Automobillacken.

Die in den nachstehenden Tabellenbeispielen angegebenen Zahlen unter den Verbindungen (1), (2) und (3) sind Molverhältnisse. ΔE ist ein Maß für die Änderung des Farborts nach der Bewetterung im Vergleich zur unbewetterten Probe (TSA-Lacksystem; Gerät (R)XENOTEST X 1200 W der Firma ORIGINAL HANAU HERAEUS GMBH), wobei gilt, daß je größer dieser Wert nach einer bestimmten Zeit ist, desto schlechter die Licht- und Wetterechtheit des geprüften Pigments ist.
Die Beispiele 5a und 5b zeigen die Überlegenheit der Verbindung der Formel (3) gegenüber Dihydrochinacridon (DC) (US-PS 3 686 009) bei der Verbesserung der Licht- und Wetterechtheit von Chinacridonchinon-Pigmenten.

T a b e l l e

| Beispiel | Verbindung (1) (R = ) | Verbindung (2) (R = ) | Verbindung (3) (R = ) | Farbe | ΔE (nach x Stunden) 1:1 -$TiO_2$-Aufhellung |
|---|---|---|---|---|---|
| 1a | 95 (R = H) | 0 | 5 (R = H) | goldgelb | 4.0 (500 h) |
| 1b | 90 (R = H) | 0 | 10 (R = H) | goldgelb | 2.0 (500 h) |
| 1c | 100 (R = H) | 0 | 0 | gelb | 12 (500 h) |
| 2a | 85 (R = H) | 10 (R = H) | 5 (R = H) | gold | 0,7 (1500 h) |
| 2b | 92 (R = H) | 5.5 (R = H) | 2.5 (R = H | gold | 1.2 (1500 h) |
| 2c | 89 (R = H) | 11 (R = H) | 0 | gold | 1.9 (1500 h) |
| 3a | 38 (R = H) | 57 (R = H) | 5 (R = H) | marron | 0.6 (2000 h) |
| 3b | 39 (R = H) | 58.5 (R = H) | 2.5 (R = H) | marron | 0.6 (2000 h) |
| 3c | 40 (R = H) | 60 (R = H) | 0 (R = H) | marron | 1.1 (2000 h) |
| 4a | 91 (R=2,9-$CH_3$) | 0 | 9 (R=2,10-$CH_3$) | goldgelb | 2.4 (500 h) |
| 4b | 100 | 0 | 0 | gelb | 6.3 (500 h) |

| Beispiel | Verbindung (1) (R = H) | Verbindung (2) (R = H) | DC (R = H) | Verbindung (3) (R = H) | ΔE (nach x Stunden) |
|---|---|---|---|---|---|
| 5a | 85 | 5 | 10 | 0 | 3.5 (2000 h) |
| 5b | 85 | 5 | 0 | 10 | 1.9 (2000 h) |

## Patentansprüche

**1.** Pigmente der Chinacridonchinon-Reihe, bestehend aus 99 - 30 Molprozent eines Chinacridonchinons der allgemeinen Formel (1)

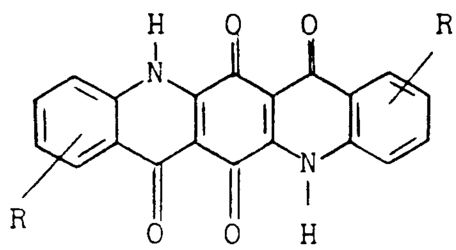

(1)

in welcher R ein Wasserstoff- oder Chloratom oder eine Methylgruppe bedeutet, 0 - 60 Molprozent eines Chinacridons der allgemeinen Formel (2)

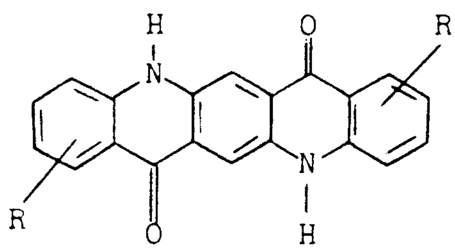

(2)

in welcher R die vorstehend genannte Bedeutung hat, und 1 - 10 Molprozent eines 7,15-Dihydro-pyrido-(2,1-b)-(1',2'; 1,2)-pyrimido-(4,5-g)-chinazolin-7,15-dions der allgemeinen Formel (3)

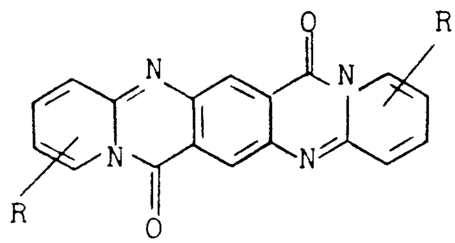

(3)

in welcher R die vorstehend genannte Bedeutung hat, wobei die zugesetzten Verbindungen der Formeln (2) und (3) im Kristallgitter des Chinacridonchinons der Formel (1) vorliegen.

**2.** Pigmente der Chinacridonchinon-Reihe, bestehend aus 99 bis 75 Molprozent eines Chinacridonchinons der Formel

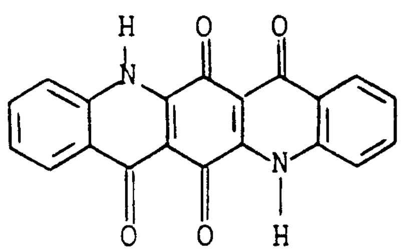

,

0 - 15 Molprozent eines Chinacridons der Formel

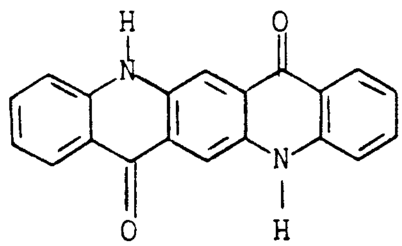

und 1 - 10 Molprozent eines 7,15-Dihydro-pyrido-(2,1-b)-(1',2'; 1,2)-pyrimido-(4,5-g)-chinazolin-7,15-dions der Formel

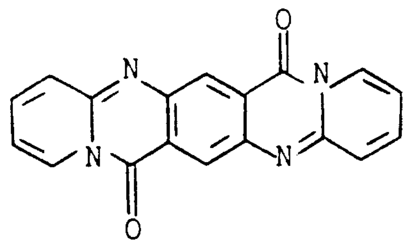

wobei die beiden letztgenannten Verbindungen im Kristallgitter des Chinacridonchinons vorliegen.

**3.** Pigmente der Chinacridonchinon-Reihe, bestehend aus 54-25 Molprozent eines Chinacridonchinons der Formel

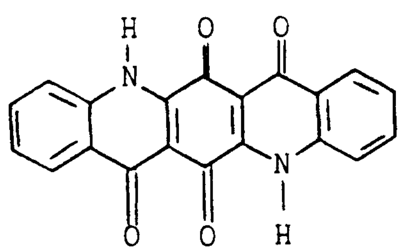 ;

45 - 65 Molprozent eines Chinacridons der Formel

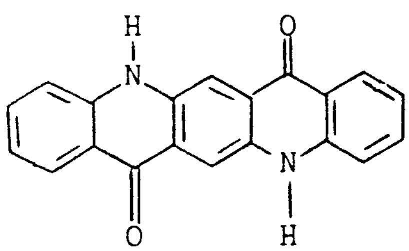

und 1 - 10 Molprozent eines 7,15-Dihydro-pyrido-(2,1-b)-(1',2'; 1,2)-pyrimido-(4,5-g)-chinazolin-7,15-dions der Formel

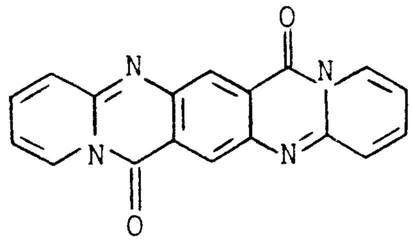

wobei die beiden letztgenannten Verbindungen überwiegend im Kristallgitter des Chinacridonchinons vorliegen.

4. Verfahren zur Herstellung von Pigmenten der Chinacridonchinon-Reihe, bestehend aus 99-30 Molprozent eines Chinacridonchinons der allgemeinen Formel (1)

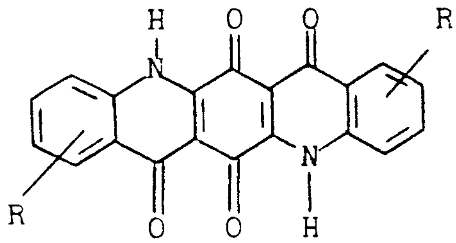

(1)

in welcher R ein Wasserstoff- oder Chloratom oder eine Methylgruppe bedeutet, 0 - 60 Molprozent eines Chinacridons der allgemeinen Formel (2)

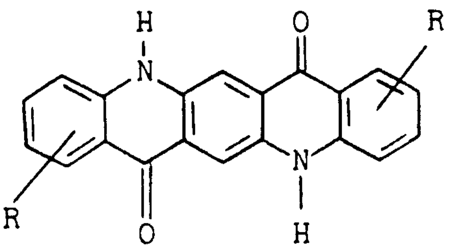

(2)

in welcher R die vorstehend genannte Bedeutung hat, und 1 - 10 Molprozent eines 7,15-Dihydropyrido-(2,1-b)-(1',2'; 1,2)-pyrimido-(4,5-g)-chinazolin-7,15-dions der allgemeinen Formel (3)

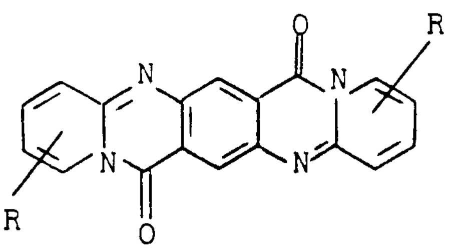

(3)

in welcher R die vorstehend genannte Bedeutung hat, dadurch gekennzeichnet, daß man die Komponenten der genannten Formeln (1), (3) und ggfs. (2) in der 5- bis 20-fachen Gewichtsmenge 96 - 100 %iger Schwefelsäure bei Temperaturen von 0 bis 40 °C löst und die Lösung anschließend auf die 5- bis 15-fache Gewichtsmenge Wasser von 0 bis 30 °C, bezogen auf das Gewicht der angewandten Schwefelsäure, gibt.

5. Verwendung der in Anspruch 1 genannten Pigmente zum Anfärben von plastischen Massen und zur Herstellung von Automobillacken für Metallic-Lackierungen.

**Claims**

1. A pigment of the quinacridonequinone series comprising 99-30 mole percent of a quinacridonequinone of the formula (1)

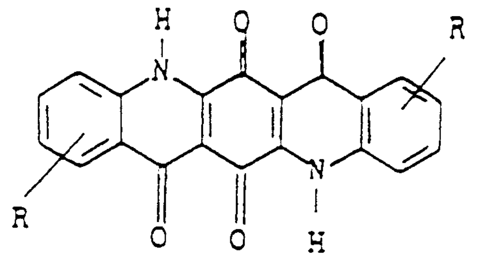

(1)

in which R denotes a hydrogen or chlorine atom or a methyl group, 0-60 mole percent of a quinacridone of the formula (2)

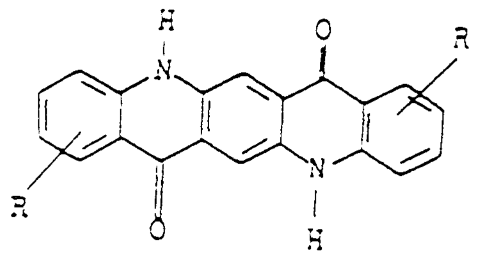

(2)

in which R has the abovementioned meaning, and 1-10 mole percent of a 7,15-dihydro-pyrido-(2,1-b)-(1',2';1,2)-pyrimido-(4,5-g)-quinazoline-7,15-dione of the formula (3)

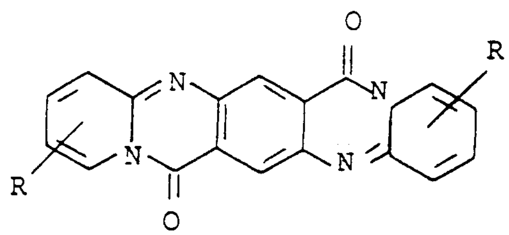

(3)

in which R has the abovementioned meaning, the added compounds of the formulae (2) and (3) being present in the crystal lattice of the quinacridonequinone of the formula (1).

**2.** A pigment of the quinacridonequinone series comprising 99 to 75 mole percent of a quinacridonequinone of the formula

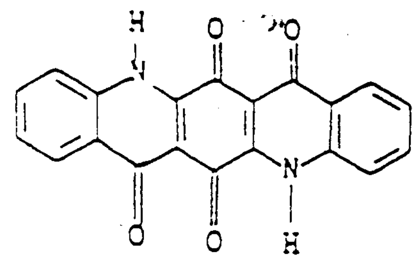

0-15 mole percent of a quinacridone of the formula

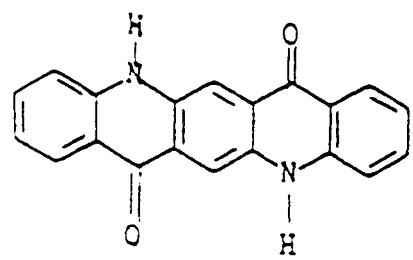

and 1-10 mole percent of a 7,15-dihydro-pyrido-(2,1-b)-(1',2'; 1,2)-pyrimido-(4,5-g)-quinazoline-7,15-dione of the formula

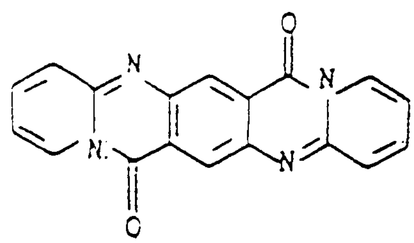

the two lastmentioned compounds being present in the crystal lattice of the quinacridonequinone.

**3.** A pigment of the quinacridonequinone series comprising 54-25 mole percent of a quinacridonequinone of the formula

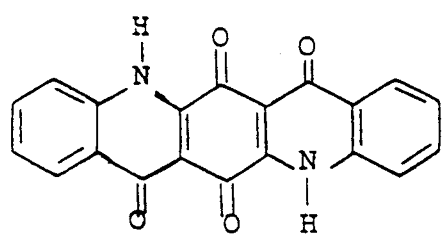

45-65 mole percent of a quinacridone of the formula

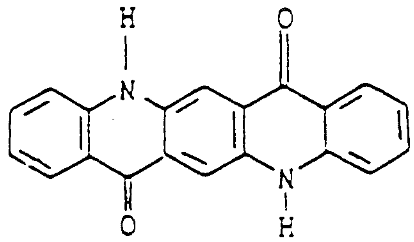

and 1-10 mole percent of a 7,15-dihydro-pyrido-(2,1-b)-(1',2'; 1,2)-pyrimido-(4,5-g)-quinazoline-7,15-dione of the formula

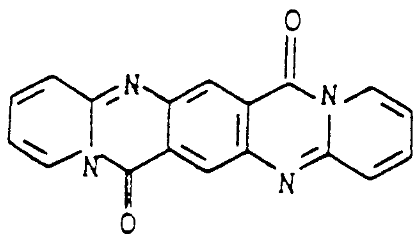

the two lastmentioned compounds being predominantly present in the crystal lattice of the quinacridonequinone.

**4.** A process for preparing pigments of the quinacridonequinone series comprising 99-30 mole percent of a quinacridonequinone of the formula (1)

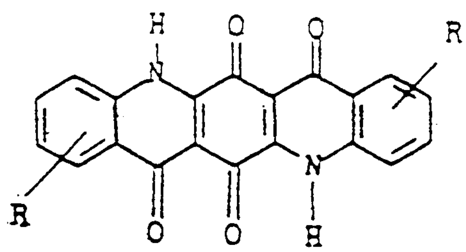

in which R denotes a hydrogen or chlorine atom or a methyl group, 0-60 mole percent of a quinacridone of the formula (2)

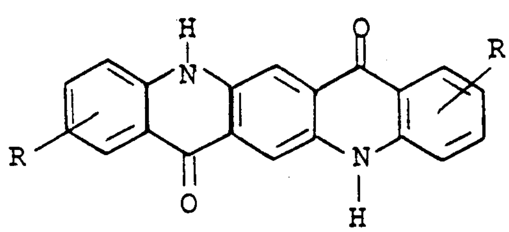

(2)

in which R has the abovementioned meaning, and 1-10 mole percent of a 7,15-dihydro-pyrido-(2,1-b)-(1',2';1,2)-pyrimido-(4,5-g)-quinazoline-7,15-dione of the formula

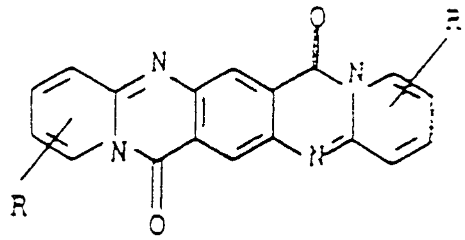

(3)

in which R has the abovementioned meaning, which comprises dissolving the components of the stated formulae (1), (3) and, where appropriate, (2) in 5 to 20 times the amount by weight of 96-100 % strength sulfuric acid at temperatures of 0 to 40° C and subsequently discharging the solution onto 5 to 15 times the amount by weight of water at 0 to 30° C, based on the weight of the sulfuric acid used.

**5.** Use of the pigment mentioned in claim 1, for coloring plastic materials and for preparing automative paints for metallic coatings.

**Revendications**

**1.** Pigments de la série des quinacridones-quinones constitués pour 99 à 30 mol % d'une quincridone-quinone de formule générale (1) ci-dessous

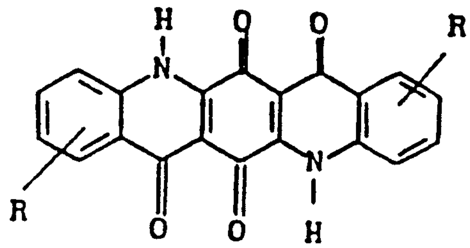

(1)

R désignant un atome d'hydrogène ou de chlore ou le groupe méthyle, pour 0 à 60 mol % d'une quinacridone de formule générale (2)

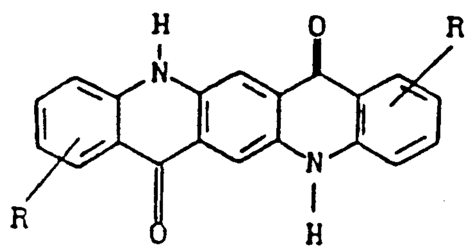

(2)

R ayant la même signification que ci-dessus, et pour 1 à 10 mol % d'une 7,15-dihydro-pyrido-(2,1-b)-(1',2'; 1,2)--pyrimido-(4,5-g)-quinazoline-7,15-dione de formule générale (3)

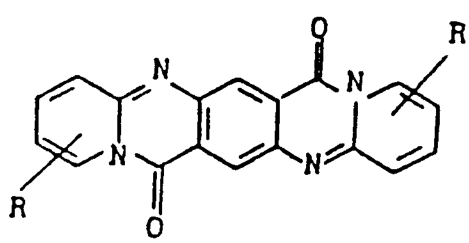

(3)

dans laquelle R a également la signification précédemment donnée, pigments dans lesquels les composés ajoutés de formule (2) et (3) se trouvent dans le réseau cristallin de la quinacridone-quinone de formule (1).

2. Pigments de la série quinacridones-quinones constitués pour 99 à 75 mol % d'une quinacridone-quinone de formule

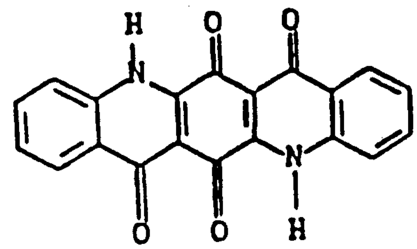

pour 0 à 15 mol % d'une quinacridone de formule

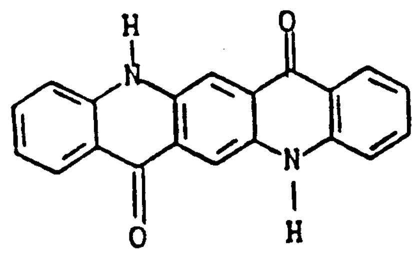

et pour 1 à 10 mol % d'une 7,15-dihydro-pyrido-(2,1-b)-(1',2'; 1,2)-pyrimido-(4,5-g)-quinazoline-7,15-dione de formule

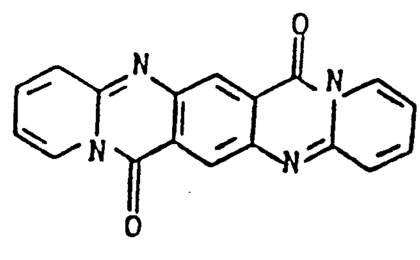

pigments dans lesquels les deux composés indiqués en dernier se trouvent dans le réseau cristallin de la quinacridone-quinone.

3. Pigments de la série quinacridones-quinones constitués de 54 à 25 mol % d'une quinacridone-quinone de formule

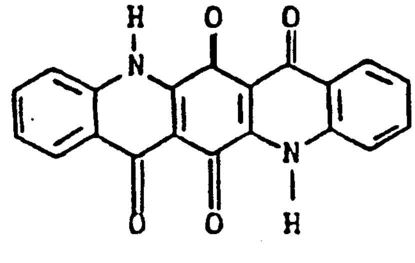

de 45 à 65 mol % d'une quinacridone de formule

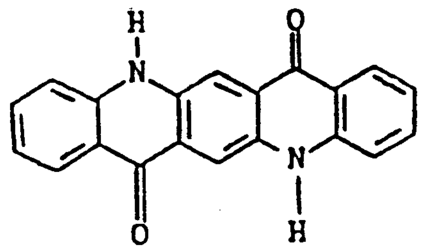

et de 1 à 10 mol % d'une 7,15-dihydro-pyrido-(2,1-b)-(1',2'; 1,2)-pyramido-(4,5-g)-quinazoline-7,15-dione de formule

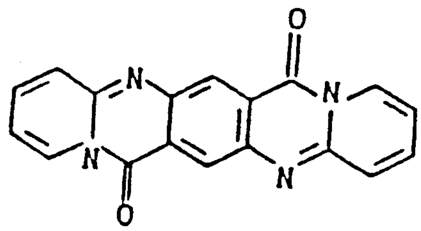

pigments dans lesquels les deux composés indiqués en dernier se trouvent principalement dans le réseau cristallin de la quinacridone-quinone.

**4.** Procédé de préparation de pigments de la série des quinacridones-quinones, constitués pour 99 à 30 mol % d'une quincridone-quinone de formule générale (1) ci-dessous

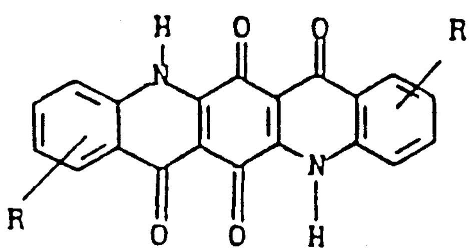

(1)

R désignant un atome d'hydrogène ou de chlore ou le groupe méthyle, pour 0 à 60 mol % d'une quinacridone de formule générale (2)

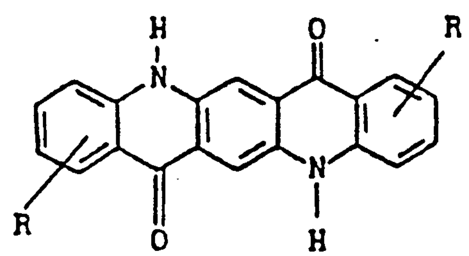

(2)

R ayant la même signification que ci-dessus, et pour 1 à 10 mol % d'une 7,15-dihydro-pyrido-(2,1-b)-(1',2'; 1,2)-pyrimido-(4,5-g)-quinazoline-7,15-dione de formule générale (3)

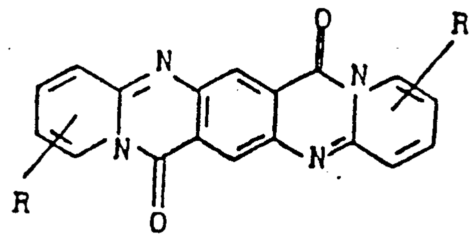

(3)

procédé caractérisé en ce que l'on dissout les composants de formule (1) et (3) et le cas échéant le composé (2) dans 5 à 20 fois leur poids d'acide sulfurique à 96 - 100 % à des températures de 0 à 40 ° C, puis on ajoute la solution à une quantité d'eau de 5 à 15 fois le poids d'acide sulfurique, à une température de 0 à 30 ° C.

**5.** L'emploi des pigments de la revendication 1 pour colorer des matières plastiques et pour fabriquer des peintures d'automobiles pour vernissages métallisées.